# EUROPÄISCHE PATENTANMELDUNG

(11) **EP 0 682 063 A1**
(43) Veröffentlichungstag der Anmeldung: **15.11.1995**
(21) Anmeldenummer: 95106225.6
(22) Anmeldetag: 26.04.1995
(51) Int. Cl.: C08J 11/24, C08J 11/28

(54) **Verfahren zur Herstellung von Hydroxylgruppen aufweisenden Verbindungen aus (Polyurethan) Polyharnstoffabfällen**

(30) Priorität: 09.05.1994 DE 4416322
(71) Anmelder: BAYER AG, 51368 Leverkusen (DE)
(72) Erfinder: Münzmay, Thomas, Dr., D-41539 Dormagen (DE); Nefzger, Hartmut, Dr., D-50259 Pulheim (DE); Rasshofer, Werner, Dr., D-51061 Köln (DE); Meckel, Walter, Dr., D-41468 Neuss (DE)

(57) **Zusammenfassung**

Die Herstellung von für das Polyisocyanat-Polyadditionsverfahren geeigneten, Hydroxylgruppen aufweisenden Verbindungen aus Polyurethanpolyharnstoff- und/oder Polyharnstoffabfällen erfolgt, indem man entweder in einer ersten Stufe feinteilige, Polyurethanpolyharnstoff- und/oder Polyharnstoffabfälle mit Di- und/oder Polyolen bei Temperaturen von 100 bis 260°C umsetzt und in einer zweiten Stufe die in der ersten Stufe erhaltenen aminhaltigen Alkoholyseprodukte mit niedermolekularen Harnstoffen und/oder Carbamidsäureestern umsetzt oder indem man Polyurethan-und/oder Polyurethanharnstoffabfälle mit Di- und/oder Polyolen in Gegenwart von niedermolekularen Harnstoffen und/oder Carbamidsäureestern umsetzt.

## Beschreibung

Die Erfindung betrifft ein Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen durch alkoholytische Zersetzung dieser Kunststoffe und anschließende Weiterreaktion der Alkoholyseprodukte zur Reduktion ihres Gehaltes an niedermolekularen, sterisch ungehinderten, aromatischen Aminen.

Die alkoholytische Zersetzung von nach dem Polyisocyanat-Polyadditionsverfahren hergestellten Kunststoffen ist im Prinzip bekannt. Jedoch ist das Problem der alkoholytischen Zersetzung von Polyurethanpolyharnstoff- oder Polyharnstoffabfällen unter Wiedergewinnung von brauchbaren Alkoholyseprodukten, insbesondere das Problem der Aufarbeitung von solchen Kunststoffen, die unter Verwendung von Polyisocyanatgemischen der Diphenylmethanreihe und aromatischen Diaminen als Kettenverlängerungsmittel hergestellt worden waren, d.h. von harnstoffgruppenreichen PUR-Abfällen, ungelöst.

Glykolysate von harnstoffgruppenreichen Polyurethanpolyharnstoff- oder Polyharnstoffabfällen zeichnen sich durch einen relativ hohen Gehalt an niedermolekularen, primären, aromatischen Aminen, insbesondere an sterisch ungehinderten, primären, aromatischen Aminen aus (B. Naber: "Recycling von Polyurethanen (PUR)", Kunststoffrecycling-Tagung der TU Berlin, 01.10.1991).

Dies beeinträchtigt die Wiederverwendbarkeit derartiger Glykolysate im Isocyanat-Polyadditionsprozeß unter Umständen erheblich. Zum einen hat ein hoher Gehalt an niedermolekularen, primären, aromatischen Aminen aufgrund deren hoher Reaktivität einen negativen Einfluß auf die Verarbeitbarkeit derartiger Glykolysate z.B. im Reaktionsspritzgußverfahren (RIM). Dies äußert sich z.B. in zu kurzen Fließwegen, d.h. anspruchsvolle Formen können nicht gefüllt werden.

Zum anderen kann ein zu hoher Gehalt an niedermolekularen, primären, aromatischen Aminen, insbesondere an sterisch ungehinderten, primären, aromatischen Aminen zu einem derartig gestörten Polymeraufbau führen, daß Produkte mit niedrigem Eigenschaftsniveau erhalten werden (hohe Glastemperatur, geringe Reißfestigkeit und Reißdehnung).

Es war daher die der Erfindung zugrundeliegende Aufgabe, ein neues Verfahren zur Herstellung von Hydroxylgruppen aufweisenden Verbindungen aus Polyurethanpolyharnstoff-oder Polyharnstoffabfällen durch alkoholytische Zersetzung zur Verfügung zu stellen, die frei von niedermolekularen, sterisch ungehinderten, primären, aromatischen Aminen oder zumindest in ihrem Gehalt stark reduziert sind.

Diese Aufgabe konnte mit der Bereitstellung des nachstehend näher beschriebenen Verfahrens gelöst werden:
Gegenstand der vorliegenden Erfindung ist daher ein Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen, das dadurch gekennzeichnet ist, daß entweder
I. in einer ersten Stufe grob gemahlene oder fein zerkleinerte (Durchmesser 0,1 bis 50 mm) Polyurethanpolyharnstoff- und/oder Polyharnstoffabfälle mit niedermolekularen Di- und/oder Polyolen und/oder höhermolekularen Di-und/oder Polyolen bei Temperaturen von 100 bis 260°C umgesetzt werden und
II. in einer zweiten Stufe die in der ersten Stufe erhaltenen aminhaltigen Alkoholyseprodukte mit niedermolekularen Harnstoffen und/oder Carbamidsäureestern bei Temperaturen von 50 bis 200°C umgesetzt werden
oder daß
Polyurethan- und/oder Polyurethanharnstoffabfälle mit niedermolekularen Di-und/oder Polyolen und/oder höhermolekularen Di- und/oder Polyolen in Gegenwart von niedermolekularen Harnstoffen und/oder Carbamidsäureestern bei Temperaturen von 100 bis 260°C umgesetzt werden.

Die Alkoholysereaktion der ersten Stufe kann nach an sich bekannten Verfahren erfolgen:

### 1. Alkoholyse mit höhermolekularen Di- und/oder Polyolen (Makroglykolen):

Grob gemahlene oder fein zerkleinerte Polyurethanpolyharnstoff- oder Polyharnstoffabfälle werden bei Temperaturen von 120 bis 260°C, bevorzugt von 160 bis 240°C, mit Makroglykolen im Gewichtsverhältnis Abfall:Makroglykol gleich 2:1 bis 1:100, bevorzugt 1:1 bis 1:20, umgesetzt. Als Makroglykole kommen bevorzugt die aus der PUR-Chemie bekannten Makroglykole aus den Klassen der Polyether, Polyester, Polylactone und Polycarbonate des Molekulargewichtsbereichs 350 bis 4000, bevorzugt 500 bis 2000, mit Funktionalitäten ≧2 in Frage.

### 2. Alkoholyse mit niedermolekularen Di- und/oder Polyolen

Grob gemahlene oder fein zerkleinerte Polyurethanpolyharnstoff- oder Polyharnstoffabfälle werden bei Temperaturen von 100 bis 260°C, bevorzugt 140 bis 240°C, mit niedermolekularen Di- und/oder Polyolen im Gewichtsverhältnis Abfall zu niedermolekularem Di- und/oder Polyol von 10:1 bis 1:10, bevorzugt 5:1 bis 1:3, umgesetzt.

Als niedermolekulare Di- und/oder Polyole kommen z.B. Ethylenglykol, Diethylenglykol und höhere Kondensate, 1,2-Propylenglykol, Dipropylenglykol und höhere Kondensate, Hexandiol, Glyzerin, Trimethylolpropan, sowie deren Ethoxylierungs- und/oder Propoxylierungsprodukte mit Molekulargewichten <350 in Frage.

Gegebenenfalls können die im Überschuß eingesetzten Di- und/oder Polyole im Anschluß an die alkoholytische Zersetzungsreaktion teilweise destillativ aus den hydroxylgruppenhaltigen Zersetzungspodukten entfernt werden.

Nach den oben beschriebenen Alkoholyseverfahren werden Hydroxylgruppen enthaltende Verbindungen erhalten, die noch erhebliche Mengen an freien, sterisch ungehinderten, aromatischen Aminen enthalten, so daß ihr Einsatz im Polyisocyanat-Polyadditionsverfahren erheblich eingeschränkt oder unmöglich ist.

Überraschenderweise wurde nun gefunden, daß der Gehalt an störenden Aminen durch anschließende Umsetzung mit oder gleichzeitige Mitverwendung von niedermolekularen Harnstoffen und/oder Carbamidsäureestern bei der Glykolyse soweit reduziert werden kann, daß wertvolle Produkte gewonnen werden, die sich ausgezeichnet für die Wiederverwertung als Reaktionspartner für Polyisocyanate beim Polyisocyanat-Polyadditionsverfahren eignen.

Die Reaktion von Harnstoffen mit aromatischen Aminen in Gegenwart von Alkoholen ist an sich bekannt (DE 2 917 569, DE 2 943 551, DE 2 943 481).

Der Literatur ist aber kein Hinweis darauf zu entnehmen, daß diese Reaktion zur Verringerung des Gehaltes an primären, aromatischen Aminen in Alkoholyseprodukten von Polyurethanharnstoff- oder Polyharnstoffabfällen vorteilhaft genutzt werden kann, so daß die resultierenden Produkte ausgezeichnet zur Wiederverwendung im Polyisocyanatpolyadditionsprozeß geeignet sind.

Die Umsetzung der aminhaltigen Alkoholyseprodukte mit niedermolekularen Harnstoffen und/oder Carbamidsäureestern erfolgt vorteilhaft bei Temperaturen von 50 bis 200°C, bevorzugt bei Temperaturen von 100 bis 180°C. In einer weiteren bevorzugten Ausführungsform werden die niedermolekularen Harnstoffe und/oder Carbamidsäureester schon vor oder während der Glykolyse den Polyolen zugesetzt.

In einer weiteren bevorzugten Ausführungsform werden die niedermolekularen Harnstoffe vor der Zugabe der Polyurethanpolyharnstoff- oder Polyharnstoffabfälle bei Temperaturen von 100 bis 250°C mit den genannten Polyolen behandelt.

Die Einsatzmengen an niedermolekularen Harnstoffen und/oder Carbamidsäureestern werden so bemessen, daß ein Äquivalentverhältnis niedermolekularer Harnstoff und/oder Carbamidsäureester zu Aminogruppen von 1:3 bis 10:1, vorzugsweise 1:2 bis 3:1, resultiert.

Zur Vervollständigung der Reaktion kann es ebenfalls vorteilhaft sein, Wasser aus dem Reaktionsgemisch beispielsweise destillativ zu entfernen.

Gegebenenfalls können inerte Lösungsmittel wie cyclische Polyether, wie z.B. Tetrahydrofuran oder Dioxan, Dialkylcarbonate wie z.B. Diethyl- oder Dimethylcarbonat oder cyclische Carbonate wie z.B. Ethylen- oder Propylencarbonat zur Verdünnung eingesetzt werden. Besonders vorteilhaft als Lösungsmittel werden Ethanol oder Methanol eingesetzt. Bei Mitverwendung eines Lösungsmittels der obengenannten Art wird es im allgemeinen notwendig sein, diese vor dem erneuten Einsatz der Hydroxylgruppen-aufweisenden Verbindungen im Isocyanatpolyadditionsprozeß destillativ zu entfernen.

Als niedermolekulare Harnstoffe kommen Verbindungen der Formel 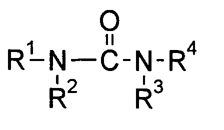
in Frage,
wobei die Reste R¹ bis R⁴ gleiche oder unterschiedliche Reste repräsentieren und wobei
- R¹ bis R⁴: Wasserstoff, lineare oder verzweigte Kohlenwasserstoffreste mit 1 bis 18 Kohlenstoffatomen, die gegebenenfalls durch Heteroatome wie O oder N unterbrochen sein können, bevorzugt 1 bis 4 Kohlenstoffatome oder Hydroxyalkylreste mit 2 bis 12 Kohlenstoffatomen, die gegebenenfalls durch Heteroatome wie O oder N unterbrochen sein können, darstellen.

Besonders bevorzugt ist Harnstoff.

Als Carbaminsäureester kommen in Frage: Carbaminsäureethylester (Urethan) oder Carbaminsäuremethylester.
In den nachfolgenden Beispielen, die der Erläuterung der Erfindung dienen, werden die folgenden Ausgangsstoffe bzw. Alkoholyseprodukte eingesetzt:
Dabei bedeuten:
OH-Z Hydroxylzahl
NH-Z Aminzahl
S-Z Säurezahl

### Polyurethanharnstoff-Abfall A1

Polyetherschaum auf Basis MDI
Dichte ca. 200 g/l
Urethangruppengehalt = 1,20 mol/kg
Harnstoffgruppengehalt = 1,35 mol/kg.

### Beispiel 1 (Vergleich)

In einem 3,6 l-Planschlifftopf mit Rührer und Heizmantel werden 750 g Diethylenglykol bei 200°C vorgelegt. Dazu werden innerhalb von 60 Minuten 1 500 g A1 zugegeben. Es wird weitere 90 Minuten unter kontinuierlichem Stickstoffstrom bei 200°C glykolysiert. Man erhält ein homogenes Glykolysat mit folgenden Eigenschaften:
OH-Z= 355
NH-Z= 32
S-Z= 0,55
primäres Diamin (Monomer-MDA) = 0,6 %

### Beispiel 2

In einem 3,6 l-Planschlifftopf mit Rührer und Heizmantel werden 750 g Diethylenglykol und 85 g Harnstoff bei 200°C vorgelegt. Dazu werden innerhalb von 60 Minuten 1500 g A1 zugegeben. Anschließend wird weitere 90 Minuten unter kontinuierlichem Stickstoffstrom bei 200°C gerührt. Man erhält ein homogenes Glykolysat mit folgenden Eigenschaften:
OH-Z= 352
NH-Z = 22
S-Z = 0,47
primäres Diamin (Monomer-MDA) < 0,1 %
Die Partikelgröße des Abfalls betrug jeweils 2 bis 8 mm (Durchmesser).

## Patentansprüche

1. Verfahren zur Herstellung von für das Polyisocyanat-Polyadditionsverfahren geeigneten, Hydroxylgruppen aufweisenden Verbindungen aus Polyurethanpolyharnstoff-und/oder Polyharnstoffabfällen, dadurch gekennzeichnet, daß entweder
I. in einer ersten Stufe grob gemahlene oder fein zerkleinerte, Polyurethanpolyharnstoff-und/oder Polyharnstoffabfälle mit niedermolekularen Di- und/oder Polyolen und/oder höhermolekularen Di- und/oder Polyolen bei Temperaturen von 100 bis 260°C umgesetzt werden und
II. in einer zweiten Stufe die in der ersten Stufe erhaltenen aminhaltigen Alkoholyseprodukte mit niedermolekularen Harnstoffen und/oder Carbamidsäureestern bei Temperaturen von 50 bis 200°C, umgesetzt werden
oder daß
Polyurethan- und/oder Polyurethanharnstofabfälle mit niedermolekularen Di- und/oder Polyolen und/oder höhermolekularen Di- und/oder Polyolen in Gegenwart von niedermolelularen Harnstoffen und/oder Carbamidsäureestern bei Temperaturen von 100 bis 260°C umgesetzt werden.

2. Verfahren gemäß Anspruch 1, dadurch gekenzeichnet, daß Harnstoff eingesetzt wird.

3. Verwendung der gemäß einem der vorhergehenden Ansprüche hergestellten Hydroxylgruppen aufweisenden Verbindungen für das Polyisocyanat-Polyadditionsverfahren.
